# EUROPÄISCHE PATENTSCHRIFT

(11) **EP 3 571 462 B1**
(45) Veröffentlichungstag und Bekanntmachung des Hinweises auf die Patenterteilung: **05.07.2023**
(21) Anmeldenummer: 17829589.5
(22) Anmeldetag: 30.11.2017
(51) Int. Cl.: G01B 11/24, G01J 5/00, G06T 7/50, G01J 5/02, G01J 5/48

(54) **VERFAHREN UND VORRICHTUNG ZUM ERZEUGEN EINES 3D-THERMOGRAMMS**
METHOD AND DEVICE FOR PRODUCING A 3-D THERMOGRAM
PROCÉDÉ ET DISPOSITIF DE GÉNÉRATION D'UN THERMOGRAMME 3D

(30) Priorität: 18.01.2017 DE 102017100885
(43) Veröffentlichungstag der Anmeldung: 27.11.2019
(73) Patentinhaber: Universität Kassel, 34125 Kassel (DE)
(72) Erfinder: KROLL, Andreas, 34131 Kassel (DE); ORDONEZ MÜLLER, Antonio, 81373 München (DE)
(74) Vertreter: Walther Bayer Faber Patentanwälte PartGmbB
(86) Internationale Anmeldenummer: PCT/DE2017/101033
(87) Internationale Veröffentlichungsnummer: WO 2018/133890

(56) Entgegenhaltungen:
- WO-A1-2014/127431
- JP-A- 2014 025 721
- US-A1- 2013 202 009
- US-A1- 2014 368 641
- IWAI D ET AL: "Optical superimposition of infrared thermography through video projection", INFRARED PHYSICS AND TECHNOLOGY, ELSEVIER SCIENCE, GB, Bd. 53, Nr. 3, 1. Mai 2010 (2010-05-01), Seiten 162-172, XP027037420, ISSN: 1350-4495 [gefunden am 2009-11-13]
- MULLER ANTONIO ORDONEZ ET AL: "On the temperature assignment problem and the use of confidence textures in the creation of 3D thermograms", 2015 9TH INTERNATIONAL CONFERENCE ON SENSING TECHNOLOGY (ICST), IEEE, 8. Dezember 2015 (2015-12-08), Seiten 223-228, XP032884564, DOI: 10.1109/ICSENST.2015.7438397 [gefunden am 2016-03-21] in der Anmeldung erwähnt

## Beschreibung

Die Erfindung betrifft ein Verfahren zum Erzeugen eines dreidimensionalen Thermogramms (kurz: 3D-Thermogramm) eines Objekts mit den Merkmalen des unabhängigen Patentanspruchs 1. Weiterhin betrifft die Erfindung eine Vorrichtung, mit der ein 3D-Thermogramm erzeugt werden kann, mit den Merkmalen des unabhängigen Patentanspruchs 6.

### STAND DER TECHNIK

Aus dem Dokument WO 2014/127431 A1 ist ein System zum Erzeugen eines 3D-Thermogramms eines Objekts bekannt. Das System weist ein Handmessgerät mit einem Sensor zum Erfassen von Entfernungsdaten auf. Weiterhin umfasst das Handmessgerät einen Infrarotsensor zum Erfassen von thermischen Daten. Mit dem Handmessgerät wird das Objekt zumindest von zwei verschiedenen Positionen aus untersucht, wobei für jede Position die Entfernungsdaten und thermische Daten von dem Objekt aufgenommen werden. Mittels einer Datenverarbeitungseinheit des Systems wird anhand der Entfernungsdaten ein dreidimensionales Modell des Objekts erzeugt, wobei Objektpunkten des dreidimensionalen Modells die mit dem Infrarotsensor aufgenommenen thermischen Daten zugeordnet werden, um so das 3D-Thermogramm zu erzeugen, das in Echtzeit auf einer Anzeigevorrichtung der Datenverarbeitungseinheit angezeigt wird. Wenn für einen Objektpunkt mehrere Werte für die thermischen Daten vorliegen, wird ein gewichteter Mittelwert dem dreidimensionalen Modell zugeordnet. Die Gewichte hängen dabei von dem Einfallswinkel, dem Abstrahlwinkel, dem Abstand zwischen dem Infrarotsensor und dem Objekt und/oder Umgebungsbedingungen wie der Umgebungstemperatur o. ä. ab.

In der Veröffentlichung "On the Temperature Assignment Problem and the Use of Confidence Textures in the Creation of 3D Thermograms" von Müller et al. (9th international Conference on Sensing Technology (ICST), pp. 223-228, Auckland, New Zealand, Dec. 2015) ist ein Verfahren mit den Merkmalen des Oberbegriffs von Patentanspruch 1 offenbart. Zum Erzeugen eines 3D-Thermogramms eines Objekts werden einerseits geometrische Daten des Objekts mittels eines Tiefensensors und andererseits Temperaturmesswerte für Objektpunkte zumindest einer Teiloberfläche des Objekts erfasst. Anhand der geometrischen Daten wird mittels einer Datenverarbeitungseinheit ein dreidimensionales Modell des Objekts ermittelt, wobei die für die verschiedenen Objektpunkte erfassten Temperaturmesswerte den entsprechenden Objektpunkten des dreidimensionalen Modells zugeordnet werden, um so das 3D-Thermogramm zu erzeugen. Neben den geometrischen Daten und den Temperaturmesswerten werden Daten zu den Aufnahmebedingungen erfasst, unter denen der Temperaturmesswert erfasst wurde. Konkret werden Daten zum Abstand zum Objekt, zum Abstrahlwinkel bezüglich der Objektoberfläche und zum Einfallswinkel bezüglich des Sensors erfasst und zusammen mit dem 3D-Thermogramm auf einer mit der Datenverarbeitungseinheit verbundenen Anzeige ausgegeben. So kann erkannt werden, wenn Temperaturmesswerte zu einzelnen Objektpunkten unter ungünstigen Aufnahmebedingungen erfasst wurden, so dass eine Messung dieses Objektpunkts wiederholt werden sollte. Wenn für den gleichen Objektpunkt in einer nachfolgenden Aufnahme eine Messung unter besseren Aufnahmebedingungen stattgefunden hat, wird der Temperaturmesswert (zusammen mit den Daten zu den Aufnahmebedingungen) automatisch überschrieben.

Gemäß den aus dem Stand der Technik bekannten Vorgehensweisen ist es möglich, sich bereits während der Durchführung der Messung einen Überblick über die Daten zu verschaffen, da diese auf einer Anzeige in Echtzeit ausgegeben werden. Davon ausgehend kann der Nutzer entscheiden, ob für bestimmte Bereiche des Objekts eine erneute Messung erforderlich ist, und er kann das Messgerät entsprechend neu zu dem zu untersuchenden Objekt ausrichten. Ein Nutzer muss also während der Durchführung der Messung seine Aufmerksamkeit sowohl auf das zu untersuchende Objekt als auch auf die Anzeige richten. Dies ist insbesondere dann nur schwer umzusetzen, wenn die Datenverarbeitungseinheit mit der Anzeige weit von dem Objekt entfernt ist. Vielmehr ist dann eine Durchführung der Messung durch zwei Personen erforderlich, wobei eine erste Person ausgehend von den bereits aufgenommenen und angezeigten Daten der zweiten Person Anweisungen gibt, wie das Messgerät für eine erneute Messung positioniert werden sollte.

Die US 2014/0368641 A1 offenbart ein Verfahren zur Ermöglichung einer einfacheren Interpretation und Analyse einer beobachteten realen Szene, indem eine sichtbare Darstellung von Infrarot (IR) Strahlungsinformation, basierend auf der von der realen Szene emittierten IR-Strahlung, und zusätzlicher Information auf die beobachtete realen Szene projiziert wird, unter Verwendung einer Thermographie Anordnung, die ein IR-Abbildungssystem, ein Abbildungssystem für sichtbares Licht und ein Projektionssystem für sichtbares Licht umfasst. Die zusätzlichen Informationen können dabei insbesondere Angaben zu Abständen innerhalb der beobachteten realen Szene umfassen.

### OFFENBARUNG DER ERFINDUNG

Es ist daher die Aufgabe der vorliegenden Erfindung, ein besonders nutzerfreundliches Verfahren sowie eine besonders nutzerfreundliche Vorrichtung zum Erzeugen eines 3D-Thermogramms eines Objekts vorzuschlagen, mit dem/der sich auf effiziente Weise ein hochwertiges 3D-Thermogramm erzeugen lässt.

Diese Aufgabe wird ausgehend von einem Verfahren gemäß dem Oberbegriff des Patentanspruchs 1 in Verbindung mit den kennzeichnenden Merkmalen gelöst. Weiterhin wird diese Aufgabe ausgehend von einer Vorrichtung gemäß dem Oberbegriff des Patentanspruchs 6 gelöst in Verbindung mit den kennzeichnenden Merkmalen. Vorteilhafte Weiterbildungen der Erfindung sind in den abhängigen Ansprüchen angegeben.

Die Erfindung schließt die technische Lehre ein, dass das erzeugte dreidimensionale Thermogramm und die Daten zu den Aufnahmebedingungen auf die zugehörige Teiloberfläche des Objekts projiziert wird, wobei die Daten zu den Aufnahmebedingungen wenigstens Daten zu einem Abstrahlwinkel, unter dem die Temperaturmesswerte ermittelt werden, umfassen.

Bei dem erfindungsgemäßen Verfahren zum Erzeugen eines 3D-Thermogramms eines Objekts werden geometrische Daten des Objekts erfasst, anhand derer ein dreidimensionales Modell des Objekts erstellt wird, und es werden für Objektpunkte von zumindest einer Teiloberfläche des Objekts Temperaturmesswerte erfasst. Die Temperaturmesswerte werden zugehörigen Objektpunkten des dreidimensionalen Modells des Objekts zugeordnet, womit sich ein 3D-Thermogramm für die Teiloberfläche erzeugen lässt. Zusätzlich werden für jeden Objektpunkt, für den ein Temperaturmesswert erfasst wird, Daten zu Aufnahmebedingungen erfasst und/oder ermittelt, unter denen der zugehörige Temperaturmesswert erfasst wurde. Diese Daten werden herangezogen, wenn in einem nachfolgenden Schritt für denselben Objektpunkt erneut ein Temperaturmesswert und Daten zu den Aufnahmebedingungen für die erneute Messung erfasst werden. In diesem Fall werden die Daten zu den Aufnahmebedingungen miteinander verglichen, wobei dem Objektpunkt in dem erzeugten dreidimensionalen Thermogramm automatisch der neu erfasste Temperaturmesswert zugeordnet wird, wenn der neu erfasste Temperaturmesswert unter besseren Aufnahmebedingungen erfasst wurde. Ein Vorteil dieser Vorgehensweise gegenüber der gewichteten Mittelung, die im Dokument WO 2014/127431 vorgeschlagen wird, ist, dass Messwerte, die unter guten Aufnahmebedingungen erfasst wurden, mit Messwerten, die unter schlechten Aufnahmebedingungen erfasst wurden, nicht gemittelt werden. (Die Mittelung von guten und schlechten Messwerten führt zu keinem besseren Messergebnis.) Nur Messwerte, die unter den besten Aufnahmebedingungen erfasst wurden, werden gehalten. So kann laufend die Qualität des erzeugten 3D-Thermogramms verbessert werden. Indem erfindungsgemäß das erzeugte 3D-Thermogramm auf die Teiloberfläche des Objekts projiziert wird, die der Teiloberfläche des dreidimensionalen Modells entspricht, kann die Durchführung der Messung erleichtert werden, da ein Nutzer so z. B. auf einfache Weise erfassen kann, über welche Teiloberflächen und jeweils mit welcher Messgüte sich das 3D-Thermogramm bereits erstreckt und für welche Teiloberflächen noch Temperaturmesswerte erfasst werden sollten, um ein vollständiges 3D-Thermogramm des Objekts zu erzeugen, das sich über die gesamte Oberfläche des Objekts erstreckt. Wenn laufend das aktuelle 3D-Thermogramm auf einem Display angezeigt wird, kann zwar unmittelbar erfasst werden, wenn für bestimmte Bereich auffällige Temperaturmesswerte erfasst worden sind, die durch eine erneute Messung verifiziert bzw. korrigiert werden sollten. Das Verfahren kann allerdings wesentlich effektiver durchgeführt werden, wenn das 3D-Thermogramm oder Information über die Aufnahmebedingungen auf das Objekt projiziert werden. Ggf. kann ein Nutzer, der die Messung durchführt, auch gleich bei dem Durchführen der Messung Rückschlüsse auf die Qualität des bereits erstellten 3D-Thermogramms ziehen. Insbesondere braucht der Nutzer so seine Aufmerksamkeit nicht einerseits auf das Objekt und andererseits auf eine Anzeige richten oder sich auf die Anweisungen einer weiteren Person verlassen. Insgesamt kann so, insbesondere bei einer manuellen Durchführung des Verfahrens, die Aufnahme der Messwerte schneller erfolgen, wobei gleichzeitig mögliche Fehler bei der Aufnahme der Messwerte minimiert werden.

Es kann ausreichend sein, wenn das erzeugte 3D-Thermogramm nur für einen Teilbereich des Objekts erzeugt wird. Entsprechend kann es ausreichend sein, wenn das dreidimensionale Modell nur einen Teil des Objekts wiedergibt und wenn nur für einen Teil der Oberfläche des Objekts die Temperaturmesswerte und die Daten zu den Aufnahmebedingungen erfasst werden. Vorzugsweise werden jedoch für die gesamte Oberfläche des Objekts geometrische Daten sowie Temperaturmesswerte und Daten zu den Aufnahmebedingungen erfasst, um so ein 3D-Thermogramm des gesamten Objekts erzeugen zu können. Insbesondere bei kleinen Objekten oder kleinen zu untersuchenden Teilbereichen eines Objekts können die Daten und Messwerte bereits durch eine oder wenige Messungen erfasst werden. Bei größeren Objekten kann es jedoch erforderlich sein, mehrere Messungen durchzuführen, wobei jede Messung eine Teiloberfläche des Objekts abdeckt und auf Basis aller Messungen schließlich das 3D-Thermogramm für das gesamte Objekt erzeugt werden kann.

Die geometrischen Daten können beispielsweise mittels eine Tiefensensors erfasst werden, mit dem für jeden Objektpunkt der Abstand von dem Tiefensensor erfasst wird. Mit den so erfassten geometrischen Daten kann das dreidimensionale Modell des Objekts erstellt werden. Konkret können das Erstellen des dreidimensionalen Modells und das Zuordnen der für die verschiedenen Objektpunkte erfassten Temperaturmesswerte zu zugehörigen Objektpunkten des dreidimensionalen Modells so erfolgen, wie in der Veröffentlichung von Müller et al. beschrieben.

Um anhand der Daten zu den Aufnahmebedingungen, die zusätzlich für jeden Objektpunkt erfasst werden, auf die Qualität des so erfassten Temperaturwertes rückschließen zu können, werden hierfür solche Daten erfasst, die Einfluss auf die Genauigkeit des erfassten Temperturmesswerts haben. Beispielsweise können die Daten zu den Aufnahmebedingungen Daten zwischen einem Abstand des Objekts und einem Beobachtungspunkt umfassen, von dem aus die Temperaturmesswerte ermittelt werden. Grundsätzlich kann dabei davon ausgegangen werden, dass Temperaturmesswerte, die unter einem kleineren Abstand aufgenommen worden sind, genauer sind als Temperaturmesswerte, die aus einem größeren Abstand aufgenommen worden sind. Erfindungsgemäß werden Daten zu einem Abstrahlwinkel, unter dem der Temperaturmesswert erfasst wurde, ermittelt. Der Abstrahlwinkel beschreibt die Richtung des vom Objektpunkt emittieren Infrarotstrahls, der vom Sensor erfasst wird, und lässt sich z. B. anhand der Orientierung der Teiloberfläche des dreidimensionalen Modells und der Position des Sensors in Bezug zu dieser Teiloberfläche ableiten. Da die winkelabhängige Wärmeabstrahlung von einem Objektpunkt auf der Teiloberfläche in einer Richtung senkrecht zu der Teiloberfläche ihr Maximum hat, ist es bevorzugt, wenn ein Temperaturmesswert unter einem kleinen Abstrahlwinkel zur Flächennormalen erfasst wird. Dennoch sollte der Abstrahlwinkel größer als ca. 15° sein, um Reflektionen des Nutzers auf das Objektoberfläche zu vermeiden. D. h. das erfindungsgemäße Verfahren ist vorzugsweise so ausgestaltet, dass für einen Objektpunkt des 3D-Thermogramms ein zuvor erfasster Temperaturmesswert überschrieben wird, wenn der Abstrahlwinkel bei einer erneuten Messung kleiner als zuvor, aber größer als ca. 15° ist.

Wenn sowohl der Abstrahlwinkel als auch der Abstand und ggf. noch weitere die Aufnahmebedingungen kennzeichnenden Parameter ermittelt werden, kann eine Priorisierung der verschiedenen Parameter erforderlich sein. Beispielsweise hat der Abstrahlwinkel üblicherweise einen größeren Einfluss auf die Qualität der Messung als der Abstand, so dass vorgesehen sein kann, dass ein erneut erfasster Temperaturmesswert nur dann automatisch dem Objektpunkt in dem 3D-Thermogramm zugeordnet wird, wenn die Abweichung von einem optimalen Abstrahlwinkel kleiner ist als bei der zuvor durchgeführten Messung. Es kann aber auch vorgesehen sein, dass eine Priorisierung in Abhängigkeit von einer relativen Verbesserung der Werte für die jeweiligen Parameter erfolgt. D. h. wenn der Abstrahlwinkel bei einer erneuten Messung dem optimalen Abstrahlwinkel nur unwesentlich näher kommt, der Abstand einem optimalen Abstand aber wesentlich näher kommt, kann der in der erneuten Messung erfasste Temperaturmesswert dem Objektpunkt zugeordnet werden, auch wenn dem Abstrahlwinkel grundsätzlich eine höhere Bedeutung beigemessen wird.

Erfindungsgemäß werden zusätzlich zu dem 3D-Thermogramm die Daten zu den Aufnahmebedingungen auf die zugehörige Teiloberfläche des Objekts projiziert. So kann sich ein Nutzer nicht nur auf einfache Weise einen Überblick über das erzeugte 3D-Thermogramm verschaffen. Vielmehr erhält er gleichzeitig einen Überblick darüber, unter welchen Aufnahmebedingungen die einzelnen Temperaturmesswerte erfasst wurden, die die Grundlage des 3D-Thermogramms bilden. Davon ausgehend kann dann entschieden werden, ob für einzelne Teiloberflächen noch einmal eine Messung unter verbesserten Aufnahmebedingungen durchgeführt werden sollte. Die Daten zu den Aufnahmebedingungen können beispielsweise als Überlagerung zu dem 3D-Thermogramm auf die Teiloberfläche des Objekts projiziert werden. Es ist aber auch möglich, dass wahlweise das 3D-Thermogramm oder die bzw. einzelne Daten zu den Aufnahmebedingungen auf die Teiloberfläche projiziert werden. Beispielsweise kann in vorgegebenen Zeitabständen automatisch zwischen den Projektionen gewechselt werden. Weiterhin ist es möglich, dass auf eine entsprechende Eingabe eines Nutzers hin zwischen der Projektion des 3D-Thermogramms und der Daten zu den Aufnahmebedingungen gewechselt wird.

Gemäß einer Ausführungsform des erfindungsgemäßen -Verfahrens wird ermittelt, ob die Daten zu den Aufnahmebedingungen um mehr als einen vorgegebenen Toleranzwert von idealen Aufnahmebedingungen abweichen. Wenn dies der Fall ist, wird angezeigt, dass das Erfassen von Temperaturmesswerten für eine Teiloberfläche des Objekts wiederholt werden sollte. Insbesondere kann die Anzeige mittels einer entsprechenden Projektion auf die Teiloberfläche des Objekts erfolgen. So kann auf besonders einfache Weise erkannt werden, ob und für welche Bereiche eine Messung der Temperaturmesswerte wiederholt werden sollte, um die Qualität des 3D-Thermogramms zu verbessern. Beispielsweise kann die Anzeige in Form einer Projektion roter Punkte auf die entsprechende Objektoberfläche erfolgen, für die erneute unter anderen Aufnahmebedingungen Temperaturmesswerte erfasst werden sollten. Die tatsächliche Farbe kann vom Benutzer ausgewählt werden und/oder kann von der Farbe der Objektoberfläche abhängen.

In weiterer Ausgestaltung können für die Teiloberfläche, für die eine Messung wiederholt werden sollte, Hinweise dazu angezeigt werden und insbesondere direkt auf die entsprechende Teiloberfläche projiziert werden, unter welchen Aufnahmebedingungen die Temperaturmesswerte erneut erfasst werden sollten. Beispielsweise können die Hinweise in Form der absoluten Werte für die Aufnahmebedingungen angezeigt werden. Es können aber auch Abweichungen von den Idealwerten angezeigt werden. Weiterhin ist es möglich, dass in Form von Richtungsanweisungen angezeigt wird, wie ein Sensor für eine erneute Messung positioniert werden sollte. Besonders einfach ist es hierbei, wenn während der Neupositionierung fortlaufend die Abweichungen von den Idealwerten ermittelt und die Richtungsanweisungen entsprechend angepasst werden. So kann sich ein Nutzer bei dem erfindungsgemäßen Verfahren praktisch zu der Idealposition führen lassen.

Typischerweise werden die erfassten Daten und Messwerte in einer Datenverarbeitungseinheit gespeichert, wo sie dann für die weitere Verwendung bereitgehalten werden, z. B. für das Erstellen des dreidimensionalen Modells, das Vergleichen der Daten zu den Aufnahmebedingungen und das Zuordnen der Temperaturmesswerte zu entsprechenden Objektpunkten des dreidimensionalen Modells. Die für die einzelnen Schritte erforderliche Rechenzeit hängt einerseits von der Leistungsfähigkeit und Speicherkapazität der Datenverarbeitungseinheit und andererseits von der zu verarbeitenden Datenmenge ab. Insbesondere wenn ein 3D-Thermogramm eines großen Objekts erzeugt werden soll, kann die Dauer für das Erzeugen des 3D-Thermogramms recht groß werden, da in einem solchen Fall Daten und Messwerte zu vielen Objektpunkten erfasst werden müssen und z. B. auch viele Temperaturmesswerte entsprechenden Objektpunkten des dreidimensionalen Modells zugeordnet werden müssen. Gemäß einer erfindungsgemäßen Ausführungsform ist daher vorgesehen, dass das dreidimensionale Modell in einem von der Datenverarbeitungseinheit separaten Speichermedium gespeichert wird und für das Zuordnen der Temperaturmesswerte zu den zugehörigen Objektpunkten des dreidimensionalen Modells nur die Teiloberfläche des dreidimensionalen Modells in die Datenverarbeitungseinheit geladen wird, die der Teiloberfläche des Objekts entspricht, für welche die Temperaturmesswerte erfasst worden sind. D. h. es wird gezielt nur der Teil des dreidimensionalen Modells geladen, dem Temperaturmesswerte zugeordnet werden können. So wird vermieden, dass ein Großteil der Speicherkapazität der Datenverarbeitungseinheit bereits allein durch das dreidimensionale Modell des Objekts belegt wird und somit nur ein geringer Anteil der Speicherkapazität für das Zuordnen der Temperaturmesswerte übrig bleibt.

Weiterhin betrifft die Erfindung eine Vorrichtung zum Erzeugen eines 3D-Thermogramms eines Objekts. Die Vorrichtung weist einen ersten Sensor zum Erfassen der Temperaturmesswerte für die Objektpunkte von zumindest einer Teiloberfläche des Objekts auf. Weiterhin umfasst die Vorrichtung einen zweiten Sensor, mit dem geometrische Daten des Objekts und Daten zu den Aufnahmebedingungen für das Erfassen der Temperaturmesswerte mit dem ersten Sensor erfasst werden können. Die geometrischen Daten und die Daten zu den Aufnahmebedingungen können dabei mit ein und demselben Sensor erfasst werden. Es ist aber auch möglich, dass der zweite Sensor mehrere Sensorelemente aufweist, von denen eines zum Erfassen der geometrischen Daten ausgebildet und ein anderes zum Erfassen bzw. Ermitteln der Aufnahmebedingungen ausgebildet ist. Schließlich umfasst die Vorrichtung eine Datenverarbeitungseinheit, der die mit dem ersten bzw. zweiten Sensor erfassten Temperaturmesswerte, geometrischen Daten und Daten zu den Aufnahmebedingungen zugeführt werden. Mittels der Datenverarbeitungseinheit kann einerseits anhand der zugeführten geometrischen Daten ein dreidimensionales Modell des Objekts erzeugt werden. Andererseits ist die Datenverarbeitungseinheit dazu eingerichtet, die für die verschiedenen Objektpunkte erfassten Temperaturmesswerte den jeweils zugehörigen Objektpunkten einer entsprechenden Teiloberfläche des dreidimensionalen Modells zuzuordnen, um ein 3D-Thermogramm für die Teiloberfläche des Objekts zu erzeugen. Zusätzlich ist die Datenverarbeitungseinheit dazu eingerichtet, Daten zu den Aufnahmebedingungen für Objektpunkte, denen bereits ein Temperaturmesswert und Daten zu den Aufnahmebedingungen zugeordnet sind und zu denen im Rahmen einer nachfolgenden Messung ein neuer Temperaturmesswert und zugehörige Daten zu den Aufnahmebedingungen ermittelt worden sind, zu vergleichen. Wenn die Aufnahmebedingungen für den neu erfassten Temperaturmesswert besser sind als für den bereits vorliegenden Temperaturmesswert, wird dabei in der Datenverarbeitungseinheit automatisch der neu erfasste Temperaturmesswert dem Objektpunkt in dem 3D-Thermogramm zugeordnet. Erfindungsgemäß werden mittels einer Projektionseinheit der Vorrichtung das erzeugte 3D-Thermogramm und die Daten zu den Aufnahmebedingungen auf die zugehörige Teiloberfläche des Objekts projiziert. Die hierfür erforderlichen Informationen werden dabei insbesondere direkt durch die Datenverarbeitungseinheit bereitgestellt.

Konkret kann der erste Sensor, mit dem die Temperaturmesswerte erfasst werden, eine Wärmebildkamera sein. Der zweite Sensor, mit dem die geometrischen Daten und die Daten zu den Aufnahmebedingungen erfasst werden, kann ein Tiefensensor (wie bspw. eine Tiefenkamera oder ein 3D-Laserscanner) sein. Alternativ kann es sich bei dem zweiten Sensor auch um eine Kamera, insbesondere eine Farbkamera, handeln. In diesem Fall werden Algorithmen zur Erkennung und Verfolgung von Merkmalen in mit der Kamera aufgenommenen Bildern verwendet, um geometrische Daten über das Objekt zu gewinnen. Es ist auch möglich mehrere Sensoren gleichzeitig zu verwenden, um so genauere geometrische Daten gewinnen zu können.

Die Vorrichtung kann so ausgebildet sein, dass ein Nutzer diese manuell um das Objekt herum bewegen kann, um das Objekt von verschiedenen Positionen aus zu untersuchen. Besonders vorteilhaft ist es hierfür, wenn die Vorrichtung als Handmessgerät ausgebildet ist oder wenn zumindest die Sensoren der Vorrichtung in ein Handmessgerät integriert sind. Die Erfindung umfasst aber auch solche Ausführungsformen, bei der die Bewegung der Vorrichtung um das Objekt automatisiert erfolgt. Hierzu ist gemäß einer Ausführungsform der Erfindung eine Steuereinheit vorgesehen, mit der die Vorrichtung automatisch entlang einer vorgegebenen Trajektorie relativ zu dem Objekt bewegbar ist. Konkret kann die Trajektorie dabei von der Datenverarbeitungseinheit ermittelt werden, z. B. unter Berücksichtigung der Daten zu den Aufnahmebedingungen und deren Abweichung von vorgegebenen Idealbedingungen. Anstelle der gesamten Vorrichtung kann es aber auch ausreichen, wenn lediglich die Sensoren der Vorrichtung relativ zu dem Objekt (oder andersherum) beweglich sind. Die Übertragung der Daten von den beweglich angeordneten Sensoren zu der stationär angeordneten Datenverarbeitungseinheit kann dabei über Kabel oder drahtlos erfolgen. Um die Sensoren automatisiert entlang der vorgegebenen Trajektorie bewegen zu können, können diese beispielsweise an einer Linearstrecke, einem Roboterarm oder einem Flugroboter angeordnet sein, wobei die Bewegung relativ zu dem Objekt von der Steuereinheit gesteuert wird.

Gemäß einer erfindungsgemäßen Ausführungsform ist neben der Datenverarbeitungseinheit ein mit der Datenverarbeitungseinheit verbundenes Speichermedium vorgesehen, in dem das dreidimensionale Modell gespeichert wird. So muss in der Datenverarbeitungseinheit nicht dauerhaft Speicherkapazität für das gesamte dreidimensionale Modell bereitgestellt werden. Vielmehr kann gezielt nur der Teil des dreidimensionalen Modells von dem Speichermedium in die Datenverarbeitungseinheit geladen werden, für den aktuell Temperaturmesswerte erfasst werden.

Hinsichtlich weiterer bevorzugter Ausführungsformen der erfindungsgemäßen Vorrichtung gelten die Ausführungen zum erfindungsgemäßen Verfahren entsprechend.

### BEVORZUGTES AUSFÜHRUNGSBEISPIEL DER ERFINDUNG

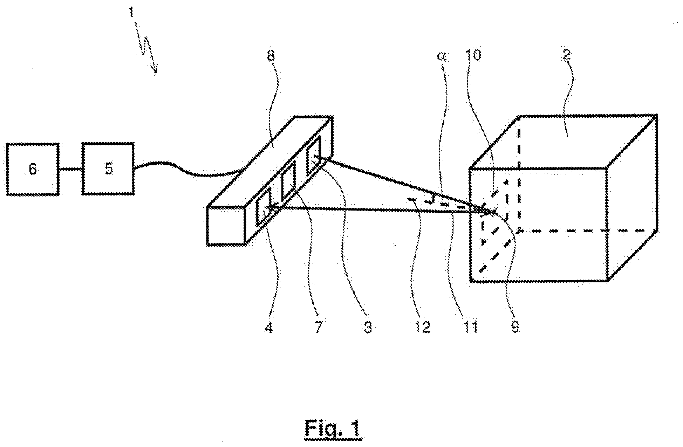

Weitere, die Erfindung verbessernde Maßnahmen werden nachstehend gemeinsam mit der Beschreibung eines bevorzugten Ausführungsbeispiels der Erfindung anhand der Figur 1 näher dargestellt. Es zeigt:
- Figur 1: stark schematisiert eine Messanordnung zur Durchführung des erfindungsgemäßen Verfahrens.

Bei der in Figur 1 gezeigten Messanordnung wird eine erfindungsgemäße Vorrichtung 1 genutzt, um damit ein 3D-Thermogramm eines Objekts 2 zu erzeugen. Die Vorrichtung 1 weist einen ersten Sensor 3, einen zweiten Sensor 4 und eine Datenverarbeitungseinheit 5 auf, welche mit einem Speichermedium 6 verbunden ist. Weiterhin weist die Vorrichtung 1 eine Projektionseinheit 7 auf. Die Sensoren 3 und 4 und die Projektionseinheit 7 sind dabei auf einem schematisch dargestellten Träger 8 angeordnet. Beispielsweise kann es sich bei dem Träger 8 um ein Handmessgerät handeln, so dass ein Nutzer auf einfache Weise die Sensoren 3 und 4 relativ zu dem Objekt 2 bewegen kann. Zusätzlich (oder alternativ) kann an dem Träger 8 eine in Fig. 1 nicht dargestellte Kamera oder Farbkamera angeordnet sein, die ebenfalls mit der Datenverarbeitungseinheit 5 verbunden ist.

Mit dem ersten Sensor 3 lässt sich ein Temperaturmesswert für einen Objektpunkt 9 einer Teiloberfläche 10 des Objekts 2 erfassen. Beispielswiese kann als erster Sensor 3 eine Wärmebildkamera eingesetzt werden, mit der sich auch für mehrere Objektpunkte 9 der Teiloberfläche 10 gleichzeitig jeweils ein Temperaturmesswert erfasst werden kann.

Mit dem zweiten Sensor 4 werden geometrischen Daten des Objekts 2 erfasst. Konkret kann es sich um einen Tiefensensor handeln, mit dem sich der Abstand 11 des Sensors 4 relativ zu den Objektpunkten 9 auf der Oberfläche des Objekts 2 ermitteln lässt. Die so ermittelten geometrischen Daten werden der Datenverarbeitungseinheit 5 zugeführt, wo anhand der geometrischen Daten ein dreidimensionales Modell des Objekts 2 erzeugt wird. Dieses wird dann von der Datenverarbeitungseinheit 5 zu dem Speichermedium 6 übertragen, wo das dreidimensionale Modell gespeichert wird.

Zusätzlich werden mit dem zweiten Sensor 4 Daten zu den Aufnahmebedingungen gewonnen, unter denen der Temperaturmesswert für den Objektpunkt 9 erfasst wird. Die Daten zu den Aufnahmebedingungen müssen hierbei nicht zwingend direkt mit dem zweiten Sensor 4 erfasst werden. Vielmehr können die Daten zu den Aufnahmebedingungen auch indirekt erfasst werden. D. h. die Erfindung schließt auch solche Ausführungsformen ein, bei denen die Daten zu den Aufnahmebedingungen anhand von direkt mit dem Sensor 4 erfassten Daten ermittelt werden. Konkret kann mit dem Sensor 4 der Abstand des Sensors 4 von dem Objektpunkt 9 erfasst werden, wobei - bei bekannter Position und Orientierung der Sensoren 3 und 4 - hierdurch auch auf die Position und Orientierung des Sensors 3 relativ zu dem Objektpunkt 9 rückgeschlossen werden kann. Zusätzlich kann mit Hilfe des zweiten Sensors 4 ein Abstrahlwinkel α, unter dem mit dem ersten Sensor 3 der Temperaturmesswert für den Objektpunkt 9 aufgenommen wird, ermittelt werden. D. h. der Abstrahlwinkel α entspricht dem Winkel, unter dem die mit dem Sensor 3 erfasste Wärmestrahlung von der Teiloberfläche 10 abgestrahlt wird. Der Abstrahlwinkel α bezeichnet hierbei den Winkel zwischen einer Verbindungslinie vom optischen Zentrum des Sensors 3 zu dem Objektpunkt 9 und einer Flächennormalen 12 zu der Teiloberfläche 10 in dem Objektpunkt 9. Daneben können weitere Daten zu den Aufnahmebedingungen, wie z. B. die Umgebungstemperatur oder ein Strahlungshintergrund, erfasst werden. Diese können dabei auch mit anderen, in Fig. 1 nicht dargestellten Sensoren erfasst werden, die ebenfalls an dem Träger 8 oder auch stationär im Bereich der Datenverarbeitungseinheit 5 angeordnet sein können.

Die mit den Sensoren 3 und 4 aufgenommenen Temperaturmesswerte und Daten zu den Aufnahmebedingungen werden der Datenverarbeitungseinheit 5 zugeführt, wo diese dann Objektpunkten des dreidimensionalen Modells des Objekts 2, die den tatsächlichen Objektpunkten 9 entsprechen, zugeordnet werden. So wird ein 3D-Thermogramm zumindest für die Teiloberfläche 10 des Objekts 2 erzeugt. Um ein vollständiges 3D-Thermogramm für das gesamte Objekt 2 zu erzeugen, wird der Träger 8 relativ zu dem Objekt 2 bewegt, so dass in nachfolgenden Messungen sukzessive auch die anderen Teiloberfläche in das Blickfeld der Sensoren 3 und 4 gelangen und somit auch für diese die entsprechenden Temperaturmesswerte und Daten erfasst werden können.

Um die jeweils erfassten Temperaturmesswerte und Daten zuordnen zu können, ist es dabei nicht erforderlich, dass das gesamte dreidimensionale Modell in die Datenverarbeitungseinheit 5 geladen wird. Vielmehr reicht es aus, wenn ein Ausschnitt des dreidimensionalen Modells geladen wird, der die jeweils untersuchte Teiloberfläche 10 beinhaltet. So wird nicht unnötig Speicherkapazität der Datenverarbeitungseinheit 5 belegt, so dass das Zuordnen der Temperaturmesswerte und der Daten zu den Aufnahmebedingungen praktisch in Echtzeit erfolgen kann.

Wenn bei dem Zuordnen eines Temperaturmesswerts und der Daten zu den Aufnahmebedingungen für einen Objektpunkt 9 festgestellt wird, dass diesem bereits ein Temperaturmesswert und Daten zu den zugehörigen Aufnahmebedingungen zugeordnet sind, werden die Daten zu den Aufnahmebedingungen der aktuellen Messung und der vorherigen Messung miteinander verglichen. Wenn die Aufnahmebedingungen bei der erneuten Messung besser waren, d. h. Idealbedingungen näher kommen, wird dem Objektpunkt des 3D-Thermogramms automatisch der neu erfasste Temperaturmesswert zugeordnet. Waren hingegen die Aufnahmebedingungen zu der vorherigen Messung besser, wird der bereits vorliegende Temperaturmesswert nicht überschrieben. So kann die Qualität des erzeugten 3D-Thermogramms sukzessive verbessert werden.

Damit ein Nutzer der Vorrichtung 1 auf einfache Weise erfassen kann, für welche Teiloberflächen 10 bereits Temperaturmesswerte und zugehörige Daten zu den Aufnahmebedingungen erfasst wurden, wird mit der Projektionseinheit 7 das von der Datenverarbeitungseinheit 5 erzeugte 3D-Thermogramm auf die zugehörigen Teiloberflächen 10 des Objekts 2 projiziert. Da die Position und Orientierung der Projektionseinheit 7 relativ zum Sensor 4 im Voraus bekannt ist, kann die Teiloberfläche des 3D-Thermogramms, die auf die Teiloberfläche 10 des Objekts 2 projiziert werden soll, bestimmt werden. Insbesondere können die Position und Orientierung mittels des Sensors 4 und damit die Orientierung und Lage der Projektionseinheit 7 relativ zu dem Objekt 2 ermittelt werden.

Indem das 3D-Thermogramm auf die zugehörigen Teiloberflächen 10 des Objekts 2 projiziert wird, kann der Nutzer auch unmittelbar erfassen, ob die gemessenen Temperaturmesswerte valide zu sein scheinen oder ob im Einzelfall eine erneute Messung durchgeführt werden sollte, um die bereits aufgenommenen Messwerte und Daten zu verifizieren bzw. zu korrigieren. Dies wird erfindungsgemäß noch weiter vereinfacht, indem mit der Projektionseinheit 7 zusätzlich zu dem 3D-Thermogramm die Daten zu den Aufnahmebedingungen auf das Objekt 2 projiziert werden. So kann der Nutzer erkennen, unter welchen Bedingungen die Temperaturmesswerte aufgenommen worden sind und selektiv für die Objektpunkte 9 bzw. Teiloberflächen 10 eine erneute Messung durchführen, die bislang nur unter suboptimalen Aufnahmebedingungen untersucht worden sind. Besonders intuitiv kann dies erfasst werden, wenn mittels der Datenverarbeitungseinheit 5 ermittelt wird, ob die Aufnahmebedingungen um mehr als einen vorgegebenen Toleranzwert von idealen Aufnahmebedingungen abweichen und bei einem Überschreiten des Toleranzwertes ein entsprechender Hinweis auf den jeweiligen Objektpunkt 9 bzw. die jeweilige Teiloberfläche 10 des Objekts 2 projiziert wird. Beispielsweise kann ein roter Punkt auf das Objekt 2 projiziert werden, der den Objektpunkt 9 markiert, für die eine Überschreitung des Toleranzwerts festgestellt wurde und für die daher eine erneute Messung vorgenommen werden sollte. Um die erneute Messung unter besseren und bestenfalls sogar unter den idealen Aufnahmebedingungen durchzuführen, können mit der Projektionseinheit 7 zusätzlich Richtungsanweisungen in Form von Pfeilen o. ä. auf das Objekt 2 projiziert werden, die den Nutzer in Richtung der idealen Aufnahmebedingungen führen. Diese Assistenzfunktion kann basierend auf den identifizierten unzureichend gescannten Teiloberflächen 10 und dem dreidimensionalen Modell des Objektes 2 erzielt werden.

Bei dem in Fig. 1 gezeigten Ausführungsbeispiel ist das Objekt 2 einfach gehalten, und es weist eine einfache geometrische Form auf.

Erfindungsgemäß kann jedoch auch für Objekte mit einer komplexen geometrischen Form, wie z. B. mit Hinterschnitten oder stark gewölbten Oberflächen u. ä., ein 3D-Thermogramm erzeugt werden. Durch die Projektion des 3D-Thermogramms auf die Objektoberfläche kann dabei auf besonders einfache Weise festgestellt werden, ob für alle Teiloberflächen bereits die Temperaturmesswerte erfasst wurden und ggf. ob deren Güte ausreichend ist.

Die Erfindung beschränkt sich in ihrer Ausführung nicht auf das vorstehend angegebene bevorzugte Ausführungsbeispiel. Vielmehr ist eine Anzahl von Varianten denkbar, welche von der dargestellten Lösung auch bei grundsätzlich anders gearteten Ausführungen Gebrauch macht.

### Bezugszeichenliste:

- 1: Vorrichtung
- 2: Objekt
- 3: Sensor
- 4: Sensor
- 5: Datenverarbeitungseinheit
- 6: Speichermedium
- 7: Projektionseinheit
- 8: Träger
- 9: Objektpunkt
- 10: Teiloberfläche
- 11: Abstand
- 12: Flächennormale
- α: Abstrahlwinkel

## Patentansprüche

1. Verfahren zum Erzeugen eines dreidimensionalen Thermogramms eines Objekts (2) mit den folgenden Schritten:
- Erfassen von geometrischen Daten des Objekts (2) und Erstellen eines dreidimensionalen Modells des Objekts (2) anhand der erfassten geometrischen Daten,
- Erfassen von Temperaturmesswerten für Objektpunkte (9) von zumindest einer Teiloberfläche (10) des Objekts (2), wobei für jeden Objektpunkt (9) neben dem Temperaturmesswert zusätzlich Daten zu Aufnahmebedingungen erfasst werden,
- Zuordnen der Temperaturmesswerte für die Objektpunkte (9) der Teiloberfläche (10) zu zugehörigen Objektpunkten einer Teiloberfläche des dreidimensionalen Modells des Objekts (2), so dass ein dreidimensionales Thermogramm für die Teiloberfläche (10) des Objekts (2) erzeugt wird,
- erneutes Erfassen von Temperaturmesswerten und von Daten zu den Aufnahmebedingungen für Objektpunkte (9) einer oder der Teiloberfläche (10) des Objekts (2),
- Vergleichen der Daten zu den Aufnahmebedingungen für Objektpunkte (9), für die bereits ein Temperaturmesswert und Daten zu den Aufnahmebedingungen erfasst wurden, wobei dem Objektpunkt in dem erzeugten dreidimensionalen Thermogramm automatisch der neu erfasste Tempertaturmesswert zugeordnet wird, wenn der neu erfasste Temperaturmesswert unter besseren Aufnahmebedingungen erfasst wurde,
**dadurch gekennzeichnet,**
**dass** das erzeugte dreidimensionale Thermogramm und die Daten zu den Aufnahmebedingungen auf die zugehörige Teiloberfläche (10) des Objekts (2) projiziert wird, wobei die Daten zu den Aufnahmebedingungen wenigstens Daten zu einem Abstrahlwinkel (α), unter dem die Temperaturmesswerte ermittelt werden, umfassen.

2. Verfahren nach Anspruch 1,
**dadurch gekennzeichnet,**
**dass** die Daten zu den Aufnahmebedingungen Daten zwischen einem Abstand (11) des Objekts (2) und einem Beobachtungspunkt, von dem aus die Temperaturmesswerte ermittelt werden, umfassen.

3. Verfahren nach einem der vorgenannten Ansprüche,
**dadurch gekennzeichnet,**
**dass** ermittelt wird, ob die Daten zu den Aufnahmebedingungen um mehr als einen vorgegebenen Toleranzwert von idealen Aufnahmebedingungen abweichen, und bei einer Abweichung um mehr als den vorgegebenen Toleranzwert angezeigt wird und insbesondere auf die entsprechende Teiloberfläche (10) des Objekts (2) projiziert wird, wenn das Erfassen von Temperaturmesswerten für die Teiloberfläche (10) des Objekts (2) wiederholt werden soll.

4. Verfahren nach Anspruch 3,
**dadurch gekennzeichnet,**
**dass** für die Teiloberfläche (10), für die das Erfassen von Temperaturmesswerten wiederholt werden soll, angezeigt wird und insbesondere auf die entsprechende Teiloberfläche (10) des Objekts (2) projiziert wird, unter welchen Aufnahmebedingungen die Temperaturmesswerte erneut erfasst werden sollen.

5. Verfahren nach einem der vorgenannten Ansprüche,
**dadurch gekennzeichnet,**
**dass** das dreidimensionale Modell des Objekts (2) in einem Speichermedium (6) gespeichert wird und für das Zuordnen der Temperaturmesswerte zu den zugehörigen Objektpunkten des dreidimensionalen Modells des Objekts (2) nur die Teiloberfläche des dreidimensionalen Modells des Objekts in eine Datenverarbeitungseinheit (5) geladen wird, die der Teiloberfläche (10) des Objekts (2) entspricht, für welche die Temperaturmesswerte erfasst worden sind.

6. Vorrichtung (1) zum Erzeugen eines dreidimensionalen Thermogramms eines Objekts (2) mit
- einem ersten Sensor (3) zum Erfassen von Temperaturmesswerten für Objektpunkte (9) von zumindest einer Teiloberfläche (10) des Objekts (2),
- einem zweiten Sensor (4) zum Erfassen von Geometrien des Objekts (2) und zum Erfassen bzw. Ermitteln der Aufnahmebedingungen für das Erfassen der Temperaturmesswerte mit dem ersten Sensor (3),
- einer Datenverarbeitungseinheit (5), der die erfassten Temperarturmesswerte, die erfassten geometrischen Daten und die Daten zu den Aufnahmebedingungen zuführbar sind,
wobei die Datenverarbeitungseinheit (5) dazu eingerichtet ist,
- anhand der zugeführten geometrischen Daten ein dreidimensionales Modell des Objekts (2) zu erstellen,
- die erfassten Temperaturmesswerte für die Objektpunkte (9) der Teiloberfläche (10) zu Objektpunkten einer zugehörigen Teiloberfläche des dreidimensionalen Modells des Objekts (2) zuzuordnen, um ein dreidimensionales Thermogramm für die Teiloberfläche (10) des Objekts (2) zu erzeugen, und
- Daten zu den Aufnahmebedingungen für Objektpunkte (9), denen bereits ein Temperaturmesswert und Daten zu den Aufnahmebedingungen zugeordnet sind, zu vergleichen und dem Objektpunkt in dem erzeugten dreidimensionalen Thermogramm den neu erfassten Tempertaturmesswert zuzuordnen, wenn die Aufnahmebedingungen für den neu erfassten Temperaturmesswert besser sind als die für den bereits vorliegenden Temperaturmesswert,
**dadurch gekennzeichnet,**
**dass** eine Projektionseinheit (7) vorgesehen ist, mit der das erzeugte dreidimensionale Thermogramm und die Daten zu den Aufnahmebedingungen auf die zugehörige Teiloberfläche (10) des Objekts (2) projizierbar sind, wobei die Daten zu den Aufnahmebedingungen wenigstens Daten zu einem Abstrahlwinkel (α), unter dem die Temperaturmesswerte ermittelt werden, umfassen.

7. Vorrichtung (1) nach Anspruch 6,
**dadurch gekennzeichnet,**
**dass** der erste Sensor (3) eine Wärmebildkamera ist und/oder der zweite Sensor (4) ein Tiefensensor ist.

8. Vorrichtung (1) nach Anspruch 6 oder 7,
**dadurch gekennzeichnet,**
**dass** eine Steuereinheit vorgesehen ist, mit der die Vorrichtung (1) oder die Sensoren (3, 4) der Vorrichtung (1) automatisch entlang einer mittels der Datenverarbeitungseinheit (5) ermittelten Trajektorie relativ zu dem Objekt (2) bewegbar ist/sind.

9. Vorrichtung (1) nach einem der Ansprüche 6 bis 8,
**dadurch gekennzeichnet,**
**dass** ein von der Datenverarbeitungseinheit (5) separates Speichermedium (6) für das Speichern des dreidimensionalen Modells vorgesehen ist.

## Claims

1. A method of generating a three-dimensional thermogram of an object (2) comprising the following steps:
- capturing geometrical data of the object (2) and preparing a three-dimensional model of the object (2) using the captured geometrical data,
- capturing measured temperature values for object points (9) of at least one partial surface (10) of the object (2), with data on recording conditions additionally being captured in addition to the measured temperature value for each object point (9),
- associating the measured temperature values for the object points (9) of the partial surface (10) with associated object points of a partial surface of the three-dimensional model of the object (2) so that a three-dimensional thermogram is generated for the partial surface (10) of the object (2),
- repeat capturing of measured temperature values and of data on the recording conditions for object points (9) of a or the partial surface (10) of the object (2), and
- comparing the data on the recording conditions for object points (9) for which a measured temperature value and data on the recording conditions have already been captured, with the newly captured measured temperature value automatically being associated with the object point in the generated three-dimensional thermogram if the newly captured measured temperature value has been captured under better recording conditions,
**characterized in that**
the generated three-dimensional thermogram and the data on the recording conditions are projected onto the associated partial surface (10) of the object (2), with the data on the recording conditions at least comprising data on an angle of radiation (α) at which the measured temperature values are determined.

2. A method in accordance with claim 1,
**characterized in that**
the data on the recording conditions comprise data between a distance of the object (2) and an observation point from where the measured temperature values are determined,

3. A method in accordance with one of the preceding claims,
**characterized in that**
a determination is made whether the data on the recording conditions deviate by more than a predefined tolerance value from ideal recording conditions; and **in that**, a display is made on a deviation by more than the predefined tolerance value and in particular a projection is made onto the corresponding partial surface (10) of the object (2) when the capturing of measured temperature values should be repeated for the partial surface (10) of the object (2).

4. A method in accordance with claim 3,
**characterized in that**
the recording conditions under which the measured temperature values should be captured again are displayed, and are in particular projected onto the corresponding partial surface (10) of the object (2) for the partial surface (10) for which the capturing of measured temperature values should be repeated.

5. A method in accordance with one of the preceding claims,
**characterized in that**
the three-dimensional model of the object (2) is stored in a storage medium (6) and only that partial surface of the three-dimensional model of the object that corresponds to the partial surface (10) of the object (2) for which the measured temperature values were captured are uploaded into a data processing unit (5) for the association of the measured temperature values with the associated object points of the three-dimensional model of the object (2).

6. An apparatus (1) for generating a three-dimensional thermogram of an object (2) comprising
- a first sensor (3) for capturing measured temperature values for object points (9) of at least one partial surface (10) of the object (2),
- a second sensor (4) for capturing geometries of the object (2) and for capturing or determining the recording conditions for the capturing of the measured temperature values by the first sensor (3), and
- a data processing unit (5) to which the captured measured temperature values, the captured geometrical data, and the data on the recording conditions can be supplied,
wherein the data processing unit (5) is configured
- to prepare a three-dimensional model of the object (2) using the supplied geometrical data,
- to associate the captured temperature values for the object points (9) of the partial surface (10) with object points of an associated partial surface of the three-dimensional model of the object (2) to generate a three-dimensional thermogram for the partial surface (10) of the object (2), and
- to compare data on the recording conditions for object points (9) with which a measured temperature value and data on the recording conditions have already been associated and to associate the newly captured measured temperature value with the object point in the generated three-dimensional thermogram if the recording conditions for the newly captured measured temperature value are better than those for the already present measured temperature value,
**characterized in that**
a projection unit (7) is provided by which the generated three-dimensional thermogram and the data on the recording conditions can be projected onto the associated partial surface (10) of the object (2), with the data on the recording conditions at least comprising data on an angle of radiation (α) at which the measured temperature values are determined.

7. An apparatus (1) in accordance with claim 6,
**characterized in that**
the first sensor (3) is an infrared image camera and/or the second sensor (4) is a depth sensor.

8. An apparatus in accordance with claim 6 or claim 7,
**characterized in that**
a control unit is provided by which the apparatus (1) or the sensors (3, 4) of the apparatus (1) is/rare automatically movable relative to the object (2) along a trajectory determined by means of the data processing unit (5).

9. An apparatus (1) in accordance with one of the claims 6 to 8, **characterized in that** a storage medium (6) for the storage of the three-dimensional model is provided separately from the data processing unit (5).

## Revendications

1. Procédé de génération d'un thermogramme tridimensionnel d'un objet (2) comportant les étapes suivantes :
- acquisition de données géométriques de l'objet (2) et création d'un modèle tridimensionnel de l'objet (2) à l'aide des données géométriques acquises,
- acquisition de valeurs de mesure de température pour des points d'objet (9) d'au moins une surface partielle (10) de l'objet (2), dans lequel, outre la valeur de mesure de température, des données relatives à des conditions d'enregistrement sont acquises en plus pour chaque point d'objet (9),
- attribution des valeurs de mesure de température pour les points d'objet (9) de la surface partielle (10) à des points d'objet associés d'une surface partielle du modèle tridimensionnel de l'objet (2), de telle sorte qu'un thermogramme tridimensionnel pour la surface partielle (10) de l'objet (2) est généré,
- nouvelle acquisition de valeurs de mesure de température et de données relatives aux conditions d'enregistrement pour des points d'objet (9) d'une ou de la surface partielle (10) de l'objet (2),
- comparaison des données relatives aux conditions d'enregistrement pour des points d'objet (9) pour lesquels une valeur de mesure de température et des données relatives aux conditions d'enregistrement ont déjà été acquises, la valeur de mesure de température nouvellement acquise étant automatiquement attribuée au point d'objet dans le thermogramme tridimensionnel généré si la valeur de mesure de température nouvellement acquise a été acquise dans de meilleures conditions d'enregistrement,
**caractérisé en ce que**
le thermogramme tridimensionnel généré et les données relatives aux conditions d'enregistrement sont projetés sur la surface partielle (10) associée de l'objet (2), les données relatives aux conditions d'enregistrement comprenant au moins des données relatives à un angle de rayonnement (α) sous lequel les valeurs de mesure de température sont déterminées.

2. Procédé selon la revendication 1,
**caractérisé en ce que**
les données relatives aux conditions d'enregistrement comprennent des données entre une distance (11) de l'objet (2) et un point d'observation duquel les valeurs de mesure de température sont déterminées.

3. Procédé selon l'une des revendications précédentes,
**caractérisé en ce que**
il est déterminé si les données relatives aux conditions d'enregistrement s'écartent de plus d'une valeur de tolérance prédéfinie de conditions d'enregistrement idéales, et lors d'un écart supérieur à la valeur de tolérance prédéfinie, il est indiqué et en particulier projeté sur la surface partielle (10) correspondante de l'objet (2) quand l'acquisition de valeurs de mesure de température pour la surface partielle (10) de l'objet (2) est à répéter.

4. Procédé selon la revendication 3,
**caractérisé en ce que**
pour la surface partielle (10) pour laquelle l'acquisition de valeurs de mesure de température est à répéter, il est indiqué et en particulier projeté sur la surface partielle (10) correspondante de l'objet (2) dans quelles conditions d'enregistrement les valeurs de mesure de température doivent être de nouveau acquises.

5. Procédé selon l'une des revendications précédentes,
**caractérisé en ce que**
le modèle tridimensionnel de l'objet (2) est enregistré dans un support de stockage (6) et, pour l'attribution des valeurs de mesure de température aux points d'objet associés du modèle tridimensionnel de l'objet (2), seule la surface partielle du modèle tridimensionnel de l'objet qui correspond à la surface partielle (10) de l'objet (2) pour laquelle les valeurs de mesure de température ont été acquises, est chargée dans une unité de traitement de données (5).

6. Dispositif (1) de génération d'un thermogramme tridimensionnel d'un objet (2) comportant :
- un premier capteur (3) destiné à l'acquisition de valeurs de mesure de température pour des points d'objet (9) d'au moins une surface partielle (10) de l'objet (2),
- un second capteur (4) destiné à l'acquisition de géométries de l'objet (2) et à l'acquisition ou la détermination des conditions d'enregistrement pour l'acquisition des valeurs de mesure de température avec le premier capteur (3),
- une unité de traitement de données (5), à laquelle les valeurs de mesure de température acquise, les données géométriques acquises et les données relatives aux conditions d'enregistrement peuvent être transmises,
l'unité de traitement de données (5) étant configurée pour
- à l'aide des données géométriques transmises, créer un modèle tridimensionnel de l'objet (2),
- attribuer les valeurs de mesure de température pour les points d'objet (9) de la surface partielle (10) à des points d'objet d'une surface partielle associée du modèle tridimensionnel de l'objet (2), pour générer un thermogramme tridimensionnel pour la surface partielle (10) de l'objet (2) et
- comparer des données relatives aux conditions d'enregistrement pour des points d'objet (9) auxquels une valeur de mesure de température et des données relatives aux conditions d'enregistrement sont attribuées et attribuer la valeur de mesure de température nouvellement acquise au point d'objet dans le thermogramme tridimensionnel généré si les conditions d'enregistrement pour la valeur de mesure de température nouvellement acquise sont meilleures que celles pour la valeur de mesure de température déjà existante,
**caractérisé en ce que**
une unité de projection (7) est prévue, avec laquelle le thermogramme tridimensionnel généré et les données relatives aux conditions d'enregistrement peuvent être projetés sur la surface partielle (10) associée de l'objet (2), les données relatives aux conditions d'enregistrement comprenant au moins des données relatives à un angle de rayonnement (α) sous lequel les valeurs de mesure de température sont déterminées.

7. Dispositif (1) selon la revendication 6,
**caractérisé en ce que**
le premier capteur (3) est une caméra thermique et/ou le second capteur (4) est un capteur de profondeur.

8. Dispositif (1) selon la revendication 6 ou 7,
**caractérisé en ce que**
une unité de commande est prévue, au moyen de laquelle le dispositif (1) ou les capteurs (3, 4) du dispositif (1) est/sont automatiquement déplaçable(s) par rapport à l'objet (2) le long d'une trajectoire déterminée au moyen de l'unité de traitement de données (5).

9. Dispositif (1) selon l'une des revendications 6 à 8,
**caractérisé en ce que**
un support de stockage (6) séparé de l'unité de traitement de données (5) est prévu pour enregistrer le modèle tridimensionnel.
